# EUROPÄISCHE PATENTANMELDUNG

(11) **EP 1 693 407 A2**
(43) Veröffentlichungstag der Anmeldung: **23.08.2006**
(21) Anmeldenummer: 06002788.5
(22) Anmeldetag: 11.02.2006
(51) Int. Cl.: C08J 9/26, C08J 9/00, C08L 1/00

(54) **Schwammtuch, Verfahren zu seiner Herstellung und seine Verwendung**

(30) Priorität: 17.02.2005 DE 102005007270
(71) Anmelder: Kalle GmbH, 65203 Wiesbaden (DE)
(72) Erfinder: Mans, Leo, Dr., 55120 Mainz (DE); Tüschen, Norbert, Dr., 65201 Wiesbaden (DE); Konzok, Georg, Dipl.-Ing., 65227 Niedernhausen (DE); Gruhn, Jasmin, 65195 Wiesbaden (DE); Laber, Nicole, 65207 Wiesbaden (DE)
(74) Vertreter: Plate, Jürgen

(57) **Zusammenfassung**

Die Erfindung betrifft ein geruchs- und geschmacksneutrales Schwammtuch, ein Verfahren zu seiner Herstellung und seine Verwendung. Das Schwammtuch ist hergestellt auf Basis von regenerierter oder gefällter Cellulose und mit einem Verstärkungsmaterial versehen. Es weist einen Gesamtschwefelgehalt von höchstens 265 mg S / kg in der Trockenmasse (TM) auf. Es ist nicht nur für die üblichen Reinigungszwecke im privaten und industriellen Bereich, sondern auch besonders in der Nahrungsmittelindustrie, als Seihfilter oder auf diagnostischem Gebiet einsetzbar.

## Beschreibung

Die Erfindung betrifft ein mit einem Verstärkungsmaterial versehenes Schwammtuch, ein Verfahren zu dessen Herstellung sowie seine Verwendung.

Schwammtücher sind seit langem bekannt. Hergestellt werden sie allgemein nach dem sogenannten Viskoseverfahren. Dabei wird zunächst Zellstoff, insbesondere Holzzellstoff, mit Natriumhydroxid und Schwefelkohlenstoff in eine alkalische Cellulosexanthogenatlösung, die sogenannte Viskoselösung, übergeführt. Parallel dazu werden Baumwollkämmlinge mit verdünnter, detergentienhaltiger NaOH entfettet. Die gereifte Viskoselösung wird dann mit den Baumwollfasern vermischt. Das geschieht im allgemeinen mit Hilfe eines Kneters. Anstelle der Baumwollfasern können als Verstärkungsmaterialien auch Viskosefasern dienen. Anschließend wird ein Porenbildner, insbesondere Glaubersalz (= Natriumsulfat-Decahydrat), hinzugefügt und gleichmäßig vermischt. Gegebenenfalls kann die Masse durch Zugabe von Farbpigmenten oder Farbstoffen eingefärbt werden. Diese Schwammtuch-Rohmasse wird dann auf einen Träger, beispielsweise ein gelochtes Endlosband, in der gewünschten Dicke aufgetragen. Es ist auch möglich, eine Mischung aus Viskoselösung und Glaubersalz mit einer Faserverstärkung aus Kunststoff, beispielsweise einem Netz aus synthetischen Fasern, insbesondere aus Polyethylenterephthalat(PET)-Fasern, zu versehen. Die Regenerierung, d.h. die Wiederausfällung, der Cellulose erfolgt dann im allgemeinen in einem erwärmten, alkalischen Koagulationsbad. Sie kann auch in einem sauren Medium, beispielsweise verdünnter Schwefelsäure, durchgeführt werden. Bei der Wiederausfällung der Cellulose wird die innere Verstärkung in den Schwammtuchkörper eingebunden.

Glaubersalz weist einen sehr niedrigen Schmelzpunkt auf. Daher wird es in dem Koagulationsbad, das typischerweise eine Temperatur von 90 bis 103 °C aufweist, aufgeschmolzen und herausgelöst. Anstelle der Salzkristalle bleiben Poren und Hohlräume entsprechender Größe zurück. Schließlich wird das Schwammtuch ausgewaschen, um es von Salzresten und anhaftenden Reaktionsprodukten zu befreien. Nach dem Trocknen wird es in schmale Bahnen geschnitten, die aufgerollt werden. Die Rollenware kann dann zu Tüchern der gewünschten Größe weiter konfektioniert werden.

Ein nach diesem Verfahren hergestelltes Schwammtuch weist im allgemeinen noch einen bestimmten Gehalt an Gesamtschwefel auf, der negativ auf die sensorischen Eigenschaften des Schwammtuches wirkt und es damit für bestimmte Anwendungen weniger geeignet oder sogar ungeeignet macht.

Bekannt sind auch Schwammtücher, die aus modifizierter Cellulose und natürlichen und/oder synthetischen Fasern hergestellt werden, wobei die Cellulose in dekristallisierter Form vorliegt und ihre Hydroxylgruppen mit Acetylgruppen modifiziert sind. Der Durchschnittssubstitutionsgrad beträgt 0,2 bis 1,5 (DE-C 196 23 704). Als Lösungsmittel wird bei der Herstellung der Schwammtücher Dimethylsulfoxid oder ein Gemisch von Dimethylsulfoxid und Lithiumchlorid, N-Methylmorpholin-N-oxid oder ein Gemisch von Dimethylacetamid und Lithiumchlorid eingesetzt. Diese Schwammtücher sind praktisch frei von organischen oder anorganischen Schwefelverbindungen, aufgrund des speziellen Cellulosematerials jedoch wesentlich teurer in der Herstellung.

In der EP-A-0 418 151 ist ein Schwamm aus regenerierter Cellulose offenbart, der unter Einsatz eines Porophors hergestellt und im Verlauf des Herstellverfahrens gebleicht wird. Angaben über die Art des Porophors und der Bleiche werden nicht gemacht. Zudem werden bei der Schwammherstellung Treibmittel verwendet, die bei der Herstellung von Schwammtuch völlig ungeeignet sind, denn dadurch wäre weder die erforderliche mechanische Stabilität, noch die notwendige Abriebfestigkeit erreichbar.

Aus der EP-B 932 360 ist ein biocid ausgerüstetes Schwammtuch auf der Basis von regenerierter Cellulose bekannt, das mit einer Innenverstärkung versehen ist.

Die Fällung und Regenerierung erfolgt in einem aus Glaubersalz, NaOH und Wasser bestehenden Bad mit einem pH-Wert von 13 oder mehr. Die Innenverstärkung besteht aus Viskosefasern.

In der EP-B 1 035 794 ist ein Schwammtuch offenbart, das nach dem Aminoxid-Verfahren hergestellt ist. In diesem Verfahren werden Lösungen von Cellulose in einem Gemisch aus einem N-Oxid eines tertiären Amins und Wasser eingesetzt. Das Schwammtuch enthält deutlich weniger störende Verunreinigungen als das nach dem Viskoseverfahren hergestellte. Aber auch hier ist noch ein Anteil an Restsulfat in dem Schwammtuch vorhanden, der einen bitteren Geschmack verursacht. Die Aminoxid/Cellulose-Lösung neigt zudem zur Zersetzung bei höheren Temperaturen (unterhalb von etwa 80 bis 85 °C erstarrt die Lösung) und es bilden sich braun-schwarze Zersetzungsprodukte. Das Schwammtuch kann deshalb nur eingeschränkt im Nahrungsmittelbereich eingesetzt werden.

Es bestand daher die Aufgabe, ein Schwammtuch zur Verfügung zu stellen, das für den Lebensmittelkontakt geeignet ist. Es soll geruchsneutral sein und in dem Lebensmittel keine Geschmacksveränderung bewirken, insbesondere keinen bitteren Geschmack übertragen, und es soll auch nicht durch Zersetzungsprodukte verfärbt sein. Es soll sich als Lebensmittelbedarfsgegenstand im Sinne der deutschen Bedarfsgegenständeverordnung eignen, daneben auch im diagnostischen Bereich. Darüber hinaus soll es einfach und kostengünstig herzustellen sein.

Gegenstand der Erfindung ist ein Schwammtuch auf Basis von regenerierter oder gefällter Cellulose, das mit einem Verstärkungsmaterial versehen ist und dessen Gesamtschwefelgehalt höchstens 265 mg Schwefel pro kg Trockenmasse (TM) beträgt. Bevorzugt liegt der Gesamtschwefelgehalt maximal bei 220 mg Schwefel, besonders bevorzugt bei nicht mehr als 200 mg Schwefel pro kg TM.

Als Verstärkungsmaterialien werden im allgemeinen Fasern oder ein Netz eingesetzt, wobei diese aus Baumwolle, Viskose und/oder Kunststoff bestehen können.

Das erfindungsgemäße Schwammtuch hat allgemein eine Dicke von 2 bis 15 mm, bevorzugt von 3 bis 12 mm. Es kann jedoch auch durch einen Spaltungsschritt noch dünner angeboten werden (beispielsweise 0,8 mm). Es weist Hohlräume auf, deren Größe der der eingesetzten Salzpartikel entspricht. Größere Hohlräume, die in künstlich hergestellten Schwämmen allgemein durch Treibmittel erzeugt werden, sind in dem erfindungsgemäßen Schwammtuch nicht vorhanden.

Gegenstand der Erfindung ist auch ein Verfahren zur Herstellung des Schwammtuchs, das folgende Schritte umfaßt:
a) Bereitstellen von Viskoselösung, mit Alkali benetzten Fasern, Porenbildnern sowie gegebenenfalls einer wäßrigen Lösung oder Dispersion mindestens eines weitgehend oxidationsbeständigen Farbstoffs oder Farbpigments,
b) Mischen der Fasern mit der Viskoselösung,
c) gegebenenfalls Zumischen der wäßrigen Lösung oder Dispersion eines Farbstoffs oder Farbpigments zu der Mischung aus Fasern und Viskose,
d) Zumischen des Porenbildners zu der Mischung gemäß c),
e) Formen der Mischung zu einer Schicht auf einem Transportband (das Auftragen erfolgt zweckmäßig mit einer Dosierpumpe und einer Auftragsdüse; dabei kann die Höhe der Schicht mit einem Bügler geregelt werden),
f) Herauslösen des Porenbildners und Regenerieren der Viskose zu Cellulose in einem wäßrig-alkalischen Bad, z.B. KOH oder NaOH bei einer Temperatur von 90 bis 103 °C, vorzugsweise etwa 95 °C,
g) Entfernen des wäßrigen Alkalis in einem weiteren Bad mit verdünnter wäßriger Mineralsäure (bevorzugt Schwefelsäure) und
h) Waschen des erhaltenen Schwammtuchbandes mit Wasser in zusätzlichen Waschbädern bis zur neutralen Reaktion und
i) Beaufschlagen des Bandes mit einer vorzugsweise wäßrigen Lösung, die ein Oxidationsmittel enthält, gegebenenfalls auch noch weitere Hilfsmittel,
k) Spülen mit Wasser, zweckmäßig mit Hilfe einer Reihe von Waschbädern, bis im letzten Waschbad praktisch kein Oxidationsmittel mehr nachweisbar ist, und
I) Trocknen des Schwammtuchs, Aufrollen und anschließendes Konfektionieren.

Anstelle des alkalischen Bades in der Stufe f) kann auch ein saures Bad (insbesondere ein Bad aus verdünnter Schwefelsäure) zur Ausfällung der Cellulose eingesetzt werden. Die Säure wird in der folgenden Stufe neutralisiert, das Schwammtuch dann wie beschrieben mit einem Oxidationsmittel behandelt, gewaschen und getrocknet.

Anstelle eines nach dem Viskoseverfahren hergestellten Schwammtuchs auf Basis von regenerierter Cellulose kann als Ausgangsmaterial auch ein nach dem Aminoxid-Verfahren hergestelltes Schwammtuch auf Basis von gefällter Cellulose dienen. Dabei wird die Cellulose in einer wäßrigen Aminoxid, vorzugsweise in N-Methyl-morpholin-N-oxid (NMMO)-Monohydrat, gelöst. Die Cellulose wird dabei rein physikalisch gelöst, sie liegt nicht in derivatisierter Form vor wie beim Viskoseverfahren. Die NMMO/Cellulose kann ebenso mit Porenbildnern und Verstärkungsmaterialien, insbesondere entfetteten Baumwoll-Kämmlingen, vermischt und zu einer Schicht geformt werden, die dann ein Fällbad durchläuft (das allgemein eine verdünnte wäßrige NMMO-Lösung enthält). Wegen des höheren Schmelzpunkts wird hierbei als Porenbildner wasserfreies Natriumsulfat gegenüber dem Natriumsulfat-Decahydrat bevorzugt. Das dabei gebildete Schwammtuchband ist zwar weitgehend frei von sulfidischen Verunreinigungen, da kein Schwefelkohlenstoff verwendet wird, es enthält jedoch häufig Zersetzungsprodukte aus dem NMMO, die sich ebenso störend bemerkbar machen.

Durch die Einwirkung des Oxidationsmittels werden gleichzeitig Bestandteile des Schwammtuchs, die einen unerwünschten Grauschleier oder eine unerwünschte Verfärbung bewirken, in farblose Verbindungen überführt, die im allgemeinen wasserlöslich sind und deshalb leicht entfernt werden können. Vor allem aber wird durch die Behandlung mit dem Oxidationsmittel der Gesamtschwefelgehalt des Behandlungsgutes reduziert. Beispiele hierfür sind z.B. Natriumhypochlorit, Wasserstoffperoxid, Perborat, Percarbonat, Peroxoessigsäure, Diperoxoazelainsäure, Diperoxododecandisäure, Permanganat oder auch das häufig eingesetzte Natriumdithionit. Bevorzugt werden aus Umweltaspekten Bleichmittel auf Sauerstoffbasis eingesetzt, die den Sauerstoff in gebundener Form enthalten. Sie beeinflussen die Umwelt nur unwesentlich. Ihre oxidative Wirkung beruht auf der Freisetzung von aktivem Sauerstoff, der wesentlich reaktionsfreudiger ist als molekularer Sauerstoff. Es sind alles Peroxo-Verbindungen mit Ausnahme von Natriumhypochlorit, das sich während und nach der Anwendung zu Wasser, Sauerstoff und Kochsalz abbaut. Natriumhypochlorit ist jedoch wegen der AOX-Belastung der Abwässer weniger bevorzugt.

Gute Bleichergebnisse werden mit Natriumperborat und Percarbonat bei Temperatur über 60 °C erzielt. Diese Temperatur läßt sich durch Zugabe von TAED und TAGU senken. Bevorzugt wird Wasserstoffperoxid verwendet, weil es - ebenso wie Natriumhypochlorit - neben seiner bleichenden auch eine gute desinfizierende Wirkung hat und sehr umweltverträglich ist.

Es ist wichtig, für den Bleichvorgang die richtige Konzentration, Temperatur und Dauer einzustellen, wodurch der Gesamtschwefelgehalt reduziert wird, ohne das Material zu beschädigen. Daher sind niedrige Konzentrationen an Bleichmittel von Vorteil. Zu empfehlen sind Konzentrationen von 0,01 bis 7,5 Gew.-%, bezogen auf die Bleichlösung. Die Bleichtemperaturen können in einem weiten Bereich variieren. Als zweckmäßig hat sich eine Temperatur von etwa 20 bis 120 °C, bevorzugt von etwa 40 bis 80 °C, erwiesen. Die Einwirkdauer beträgt allgemein etwa 10 s bis 10 min, bevorzugt etwa 30 s bis 5 min. Innerhalb dieser Zeitspanne wird im allgemeinen eine optimale Ausbeute hinsichtlich der Reduzierung des Gesamtschwefelgehalts bei geringer Konzentration an Bleichmittel und niedriger Temperatur erreicht. Höhere Temperaturen führen gewöhnlich zu einer Verkürzung der Verfahrenszeit. Die oxidative Behandlung erfolgt zweckmäßig in-line durch Aufsprühen der entsprechenden Lösung auf eine oder beide Seiten des Schwammtuchbands. Überschüssige Lösung kann durch ein Quetschwalzenpaar entfernt werden.

Die Bleichmittel können allein oder zusammen mit Hilfsmitteln, beispielsweise Tensiden oder Netzmitteln eingesetzt werden.

Als Porenbildner dienen in dem Verfahren gemäß der Erfindung zweckmäßigerweise anorganische Salze, die leicht wasserlöslich sind. Zu nennen sind vorzugsweise Alkali-, Erdalkali- und Ammoniumsalze anorganischer Säuren, wie Chloride (speziell NaCl und KCI, nicht jedoch MgCl₂), Sulfate (speziell Na₂SO₄ und MgSO₄), Phosphate (speziell Mg₃(PO₃)₂, Silikate (speziell Mg₂[SiO₄] = Forsterit) und Carbonate (speziell Na₂CO₃, CaCO₃ und (NH₄)₂CO₃). Insbesondere wird Na₂SO₄ • 10 H₂O = Glaubersalz eingesetzt. Der Anteil an Porenbildner beträgt allgemein 50 bis 90 Gew.-%, bevorzugt 70 bis 85 Gew.-%, jeweils bezogen auf das Gesamtgewicht der Schwammtuchrohmasse (Viskose bzw. NMMO/Cellulose, Verstärkungsmaterial und Porenbildner).

Die Dichte der nach dem Viskoseverfahren hergestellten Schwammtücher beträgt allgemein etwa 85 bis 140 kg/m³, bevorzugt 100 bis 120 kg/m³. Nach dem NMMO-Verfahren hergestellte Schwammtücher weisen in der Regel eine höhere Dichte auf. Sie beträgt allgemein über 100 kg/m³, bevorzugt etwa 110 bis 140 kg/m³.

Das Rohmaterial der Schwammtücher, d.h. die Viskoselösung wird im allgemeinen während des Produktionsprozesses mit Farbstoffen versetzt. Es ist natürlich ebenfalls möglich, ein ungefärbtes Schwammtuch einer oxidativen Behandlung in der Stufe i) zuzuführen. Für das Verfahren gemäß der Erfindung ist es daher notwendig, solche Farbstoffe einzusetzen, die beim Oxidationsprozeß keine oder nur eine geringfügige Veränderung ihres Farbtones erfahren. Während bei einem ungefärbten Schwammtuch der Weißgrad verbessert wird, kommt bei einem eingefärbten Schwammtuch eine Erhöhung der Farbtonbrillanz zur Geltung.

Aus der Vielzahl derartiger auf dem Markt befindlichen Farbstoffe (einzeln oder in Mischungen) werden daher - auch aus wirtschaftlichen Erwägungen heraus - vorzugsweise weitestgehend oxidations- und/oder chlorbeständige Reaktiv - und Pigmentfarbstoffe ausgewählt.

Das Schwammtuch gemäß der Erfindung zeichnet sich durch einen geringen Gesamtschwefelgehalt aus. Er ist damit geruchsneutral und überträgt keinen Geschmack auf Lebensmittel, die damit in Berührung kommen. Dadurch ist sein Einsatzgebiet gegenüber einem normalen, handelsüblichen Schwammtuch erheblich erweitert. Es eignet sich u.a. für den Einsatz in der Nahrungsmittelindustrie, wo es auf Sterilität und Geschmacksneutralität ankommt, beispielsweise in der Herstellung von Brot und Backwaren, insbesondere bei der Herstellung von Sesambrötchen, oder bei der Tofuproduktion. Darüber hinaus kann es als reißfestes Seihfiltermaterial verwendet werden. Ebenfalls kann es im Haushalt bei allen Tätigkeiten eingesetzt werden, bei denen ein Abtrocknen oder Abwischen von Lebensmitteln nötig ist. Aufgrund seiner Geschmacksneutralität, seiner Sterilität, seiner hohen Feuchtigkeitsaufnahme und seiner Abrieb- und Abrißfestigkeit ist es beispielsweise einem Fließpapier überlegen. Das Schwammtuch gemäß der vorliegenden Erfindung kann auch wegen seiner Sterilität auf diagnostischem Gebiet zum Einsatz kommen. Eine zusätzliche, gegebenenfalls auch eine nachträgliche Sterilisierung kann durch Behandeln mit Gammastrahlen oder durch Begasen mit Ethylenoxid erreicht werden.

Die Schwammtücher gemäß der Erfindung enthalten weder Pentachlorphenol (PCP) noch Schwermetalle (Cadmium, Quecksilber, Blei, Chrom). Ein möglicher Gehalt dieser Verbindungen liegt unter der Nachweisgrenze und ist deshalb nicht bestimmbar.

### Beispiel 1

Von einem gewaschenen und gebleichten Viskoseschwammtuch wurde ein Kaltwasserextrakt gemäß DIN EN 645 hergestellt.

### Bestimmung von Pentachlorphenol (PCP):

Sie erfolgte nach prEN ISO 15320 mittels Gaschromatographie im Extrakt nach Anreicherung an einer Vorsäule und Veresterung. Die Detektion wurde mittels ECD durchgeführt. Ergebnis: nicht bestimmbar, d.h. weniger als 0,005 mg/kg TM.

### Bestimmung der Schwermetalle:

Sie erfolgte nach der ENV 12497 und der ENV 12498
Ergebnis:
- Cd:: nicht bestimmbar, d.h. weniger als 0,05 mg/kg TM
- Hg:: nicht bestimmbar, d.h. weniger als 0,025 mg/kg TM
- Pb:: nicht bestimmbar, d.h. weniger als 0,5 mg/kg TM
- Cr:: nicht bestimmbar, d.h. weniger als 0,1 mg/kg TM

### Beispiel 2

Sensorische Prüfung von Schwammtüchern:
Die Prüfung erfolgte auf Basis der DIN 10 955.
1 dm² der Schwammtücher wurde für 2 Minuten in 250 ml Wasser gelagert. Das Wasser wurde von 6 Prüfern in einer erweiterten Dreiecksprüfung nach DIN ISO 4120 beurteilt. Als Kontrollprobe diente Wasser, das keinen Kontakt mit dem Prüfmuster hatte. Die Bewertung basiert auf folgender Intensitätsskala:
0 = keine wahrnehmbare Geschmacksabweichung
1 = gerade wahrnehmbare Geschmacksabweichung (noch schwer definierbar)
2 = schwache Geschmacksabweichung
3 = deutliche Geschmacksabweichung
4 = starke Geschmacksabweichung

- Probe 1:: *Viskoseschwammtuch, gewaschen und gebleicht:* Zwischen dem Wasser, das in Kontakt mit dem Prüfmuster stand und dem Wasser, das keinen Kontakt dazu hatte, konnte kein statistisch gesicherter Unterschied festgestellt werden. Bewertung (Mittelwert): 1,5
- Probe 2:: *Schwammtuch, farblos unbehandelt, nur gewaschen:* Bei dem Wasser, das mit dem Prüfmuster in Kontakt kam, wurde eine statistisch hoch signifikante Abweichung des Geschmacks von der Kontrollprobe festgestellt, die als unangenehm, holzartig und bitter zu beschreiben war, Bewertung (Mittelwert): 2,7

### Beispiel 3

Bestimmung von Gesamtschwefel:
Die Bestimmung erfolgte nach Verbrennung in einem Schöniger-Kolben mittels Ionenchromatographie als Sulfat. Für die Verbrennung wurde jeweils ein Teilstück des Probenmaterials entnommen. Eine Homogenisierung war nicht möglich, da bei einer Mahlung adsorbierte, evtl. vorhandene Schwefelkohlenstoffanteile verloren gehen würden. Es wurde je eine Doppelbestimmung durchgeführt.

| Probenmaterial Viskose-Schwammtuch | | Ergebnis |
|---|---|---|
| Probe 1: | Ausgangsmaterial, ungebleicht | 302,5 mg S / kg TM |
| Probe 2: | Bleiche in-line (Erfindung) | 217 mg S / kg TM |
| Probe 3: | Bleiche off-line (Erfindung) | 260 mg S / kg TM |

### Beispiel 4

Bestimmung von Gesamtschwefel gegenüber Fremdmustern:
Die Bestimmung erfolgte wie in Beispiel 3 beschrieben. Es wurde je eine Dreifachbestimmung durchgeführt.

| Probenmaterial Viskose-Schwammtuch | | Ergebnis |
|---|---|---|
| Probe 1: | Ausgangsmaterial, ungebleicht | 303 mg S / kg TM |
| Probe 2: | kommerziell erhältliches Produkt aus China | 425 mg S / kg TM |
| Probe 3: | kommerziell erhältliches Produkt aus Spanien | 3350 mg S / kg TM |
| Probe 4: | kommerziell erhältliches Produkt aus Schweden | 527 mg S / kg TM |

## Patentansprüche

1. Schwammtuch auf Basis von regenerierter oder gefällter Cellulose, das mit einem Verstärkungsmaterial versehen ist, **dadurch gekennzeichnet, daß** es einen Gesamtgehalt von nicht mehr als 265 mg Schwefel pro Kilogramm Trockenmasse (TM) aufweist.

2. Schwammtuch nach Anspruch 1, **dadurch gekennzeichnet, daß** der Gesamtschwefelgehalt nicht mehr als 220 mg, bevorzugt nicht mehr als 200 mg S / kg TM beträgt.

3. Schwammtuch nach Anspruch 1 oder 2, **dadurch gekennzeichnet, daß** das Verstärkungsmaterial aus Fasern oder einem Netz besteht.

4. Schwammtuch nach Anspruch 3, **dadurch gekennzeichnet, daß** das Verstärkungsmaterial Baumwolle, Viskose und/oder Kunststoff umfaßt.

5. Schwammtuch nach einem oder mehreren der Ansprüche 1 bis 4, **dadurch gekennzeichnet, daß** es geruchs- und geschmacksneutral ist.

6. Verfahren zur Herstellung eines Schwammtuchs nach Anspruch 1 auf Basis von regenerierter Cellulose, das mit einem Verstärkungsmaterial versehen ist, **dadurch gekennzeichnet, daß** es folgende Schritte umfaßt:
a) Bereitstellen von Viskoselösung, mit Alkali benetzten Fasern und Porenbildner
b) Mischen der Fasern mit der Viskoselösung,
d) Zumischen des Porenbildners zu der Mischung gemäß b),
e) Formen der Mischung zu einer Schicht auf einem Transportband,
f) Herauslösen des Porenbildners und Regenerieren der Viskose zu Cellulose in einem wäßrig-alkalischen Bad bei einer Temperatur von 90 bis 103 °C unter Bildung des Schwammtuchs in Form eines breiten Bandes,
g) Entfernen des wäßrigen Alkalis in einem weiteren Bad mit verdünnter wäßriger Mineralsäure,
h) Waschen des Schwammtuchbandes mit Wasser in zusätzlichen Waschbädern bis zur neutralen Reaktion und
i) Beaufschlagen des Bandes mit einer Lösung, die mindestens ein Oxidationsmittel enthält,
k) Spülen mit Wasser und
I) Trocknen des Schwammtuchs, Aufrollen und anschließendes Konfektionieren.

7. Verfahren nach Anspruch 6, **dadurch gekennzeichnet, daß** gegebenenfalls als Stufe c) eine wäßrige Lösung oder Dispersion mindestens eines weitestgehend oxidations- und/oder chlorbeständigen Farbstoffs und/oder Farbpigments zu der Mischung aus Fasern und Viskose zugemischt wird.

8. Verfahren nach Anspruch 6 oder 7, **dadurch gekennzeichnet, daß** in der Stufe f) vorzugsweise bei einer Temperatur von 95 °C gearbeitet wird, wobei entweder ein wäßrig-alkalisches Bad mit KOH oder NaOH als alkalisches Agens oder ein saures Bad mit vorzugsweise verdünnter Schwefelsäure zur Ausfällung der Cellulose verwendet wird.

9. Verfahren nach einem oder mehreren der Ansprüche 6 bis 8, **dadurch gekennzeichnet, daß** der Porenbildner Glaubersalz ist und der Anteil des Porenbildners 50 bis 90 Gew.-%, bevorzugt 70 bis 85 Gew.-%, beträgt, jeweils bezogen auf das Gesamtgewicht der Mischung aus Viskose, Verstärkungsmaterial und Porenbildner.

10. Verfahren nach einem oder mehreren der Ansprüche 6 bis 9, **dadurch gekennzeichnet, daß** in Stufe i) die Lösung, die mindestens ein Oxidationsmittel enthält, auf eine oder beide Seiten des Bandes aufgesprüht wird.

11. Verfahren zur Herstellung eines Schwammtuchs gemäß einem oder mehreren der Ansprüche 1 bis 5, **dadurch gekennzeichnet, daß** es folgende Schritte umfaßt:
a) Bereitstellen einer Lösung von Cellulose in wäßrigem Aminooxid, Verstärkungsfasern und Porenbildner;
b) Mischen der Lösung von Cellulose in wäßrigem Aminoxid mit den Fasern und dem Porenbildner;
c) schichtförmiges Ausstreichen der Mischung auf ein Transportband;
d) Führen der Schicht durch ein Fällbad, das eine verdünnte wäßrige Aminoxidlösung enthält;
e) Waschen der dabei gebildeten Schwammtuchbahn;
f) Behandeln der Schwammtuchbahn mit einer wäßrigen Lösung mindestens eines Oxidationsmittels;
g) Erneutes Waschen der Schwammtuchbahn sowie
h) Trocknen und Konfektionieren der Schwammtuchbahn zu einzelnen Schwammtüchern.

12. Verfahren gemäß Anspruch 11, **dadurch gekennzeichnet, daß** als Aminoxid N-Methyl-morpholin-N-oxid eingesetzt wird.

13. Verfahren gemäß Anspruch 11 oder 12, **dadurch gekennzeichnet, daß** in Schritt f) die wäßrige Lösung mindestens eines Oxidationsmittels auf eine oder beide Seiten der Schwammtuchbahn aufgesprüht wird.

14. Verwendung des Schwammtuchs gemäß einem oder mehreren der Ansprüche 1 bis 5 für den Einsatz in der Nahrungsmittelindustrie, als Seihfilter oder auf diagnostischem Gebiet.
